# EUROPEAN PATENT APPLICATION

(11) **EP 4 364 841 A1**
(43) Date of publication of application: **08.05.2024**
(21) Application number: 22832941.3
(22) Date of filing: 21.06.2022
(51) Int. Cl.: B01J 23/63, B01D 53/94

(54) **OXIDATION CATALYST FOR EXHAUST GAS PURIFICATION**

(30) Priority: 28.06.2021 JP 2021107081
(71) Applicant: N.E. Chemcat Corporation, Tokyo 105-6124 (JP)
(72) Inventor: NAGAKUBO Junki, Tokyo 105-6124 (JP); BANNO Yasuyuki, Tokyo 105-6124 (JP)
(74) Representative: Regimbeau
(86) International application number: PCT/JP2022/024770
(87) International publication number: WO 2023/276793

(57) **Abstract**

Provided is a novel catalyst for exhaust gas purification, which contains no Ce compound conventionally considered essential for low-temperature catalytic activity and is excellent in low-temperature oxidative activity. The catalyst is an oxidation catalyst for exhaust gas purification, including a base material and a catalyst layer provided on the base material, in which the catalyst layer includes first catalyst particles and second catalyst particles, the first catalyst particles each include a first carrier particle containing a rare earth element other than cerium; and palladium (Pd) which is carried by the carrier particle, and the second catalyst particles each include a second carrier particle; and platinum (Pt) and palladium (Pd) which are carried by the carrier particle.

## Description

### BACKGROUND OF THE INVENTION

### Field of the Invention

The present disclosure relates to an oxidation catalyst for exhaust gas purification. More specifically, the present invention relates to an oxidation catalyst for exhaust gas purification comprising a combination of a plurality of ceria-free oxidation catalyst particles and having excellent low-temperature purification performance.

### Background Art

Among various internal combustion engines, exhaust gas emitted from lean-burn engines such as boilers, gas turbines, lean-burn gasoline engines, and diesel engines contains different harmful substances derived from fuel and combustion air. These harmful substances include hydrocarbon (HC), carbon monoxide (CO), nitrogen oxide (NOx), and particulate matter (PM), and regulations regarding the emissions of these harmful components are becoming more and more strict year by year. As a method for purifying these harmful components, a combination of exhaust gas purification devices such as a diesel oxidation catalyst (DOC), a diesel particulate filter (DPF), and a selective catalytic reduction (SCR) is used.

Above all, most of the NOx contained in the exhaust gas of a lean-burn engine is NO, and the proportion of NO₂ is small. However, NO₂ is used as a combustion aid for accumulated PM collected by DPF, and appropriate NO₂ concentration is required for efficient reduction reaction with ammonia in SCR. Therefore, a DOC catalyst that oxidizes HC, CO, and NO is installed closer to the internal combustion engine than DPF and SCR.

Moreover, in recent years, regulations on the emissions of carbon dioxide (CO₂) as a greenhouse gas have been tightened. Since CO₂ emission is proportional to the amount of fuel used for operating engines, it is desirable for internal combustion engines to use less fuel and be more fuel efficient. Given this, studies are in progress on various efficient combustion conditions that reduce heat loss and exhaust loss, but it means decreased combustion temperatures, and the exhaust gas temperature required for catalytic activity tends to be reduced. As a result, a new problem has arisen: the time for conventional catalysts to be maintained at the activation temperature becomes shorter, making it impossible to remove harmful substances sufficiently.

In response to such a problem, various exhaust gas purification systems that can burn PM using NOx, even at low temperatures, have been studied (e.g., Patent Literature 1 and 2). In addition, a method for suppressing contaminants during cold start using a catalyst containing a ceria compound that adsorbs and retains pollutants such as NOx when the catalyst is inactive at low temperatures and releases pollutants when the catalyst reaches its activation temperature and/or a ceria-zirconia composite oxide is used (Patent Literature 3).

However, ceria has the disadvantage of being vulnerable to sulfur contained in exhaust gas. In this regard, Patent Literature 4 discloses the fragile sulfur resistance of ceria is improved such that excellent catalytic activity is exerted by using an oxidation catalyst composite comprising: an oxidative material in which a platinum group element such as palladium and a rare earth oxide component such as ceria are carried on a heat-resistant metal oxide support containing lanthanum, zirconia, or the like; and two other specific oxidative materials.

### Citation List

### Patent Literature

Patent Literature 1: JP H01-318715 A (1989)
Patent Literature 2: JP 2005-248964 A
Patent Literature 3: JP 2018-530419 A
Patent Literature 4: JP 2018-511475 A

### SUMMARY OF THE INVENTION

The present inventors conducted a multivariable analysis based on a large amount of past experimental data with the aim of developing a catalyst with superior low-temperature activity. As a result, the inventors found that the Ce content is strongly correlated with the catalytic activity temperature.

Further, the inventors evaluated the activity using an actual catalyst based on the above-described hypothesis. As a result, the inventors found that the above-described analysis results are correct, and there is a new problem that Ce compounds (particularly Ce-Ze compounds), which are commonly used as pollutant storage materials at low temperatures, inhibit oxidation reactions at low temperatures and also reduce the amount of NO₂ required for the subsequent SCR and DPF.

Therefore, an object of the present disclosure is to provide a novel catalyst for exhaust gas purification, which does not contain a Ce compound conventionally considered essential for low-temperature catalytic activity and is excellent in low-temperature oxidative activity.

The present disclosure has been made in view of the above-described object. It has been found that an exhaust gas oxidation catalyst for diesel engines with excellent catalytic activity at low temperatures (oxidation performance of HC, CO, and NOx) without containing Ce can be provided by adding a compound that reduces the content of Ce, which inhibits low-temperature activity and improves low-temperature activity. Specifically, the gist of the present disclosure is as follows.

[1] An oxidation catalyst for exhaust gas purification, comprising a base material and a catalyst layer provided on the base material,
   wherein the catalyst layer comprises first catalyst particles and second catalyst particles,
   the first catalyst particles each comprise a first carrier particle containing a rare earth element other than cerium and palladium (Pd) carried by the first carrier particle, and
   the second catalyst particles each comprise a second carrier particle and platinum (Pt) and palladium (Pd) carried by the second carrier particle.
[2] The oxidation catalyst for exhaust gas purification according to [1], wherein the rare earth element other than cerium is at least one light rare-earth element selected from the group consisting of lanthanum (La), praseodymium (Pr), neodymium (Nd), samarium (Sm), and europium (Eu).
[3] The oxidation catalyst for exhaust gas purification according to [1] or [2], wherein the first catalyst particles and the second catalyst particles are contained together in a catalyst layer.
[4] The oxidation catalyst for exhaust gas purification according to any one of [1] to [3], wherein the catalyst layer substantially contains no cerium element.
[5] The oxidation catalyst for exhaust gas purification according to any one of [1] to [4], wherein the first carrier particle further contains a zirconia element.
[6] The oxidation catalyst for exhaust gas purification according to any one of [1] to [5], wherein the first carrier particle is a lanthanum-zirconia composite oxide particle.
[7] The oxidation catalyst for exhaust gas purification according to any one of [1] to [6], the second carrier particle is a silica-alumina composite oxide particle.
[8] The oxidation catalyst for exhaust gas purification according to any one of [1] to [7], wherein the base material has a predetermined length along an exhaust gas flow direction and comprises an inlet end and an outlet end.

According to the present disclosure, an exhaust gas oxidation catalyst for diesel engines with excellent catalytic activity at low temperatures (oxidation performance of HC, CO, and NOx) without containing Ce can be realized by using a combination of first catalyst particles in which carrier particles comprising a specific rare earth element carry palladium and second catalyst particles in which carriers carry platinum and palladium.

### BRIEF DESCRIPTION OF THE DRAWING

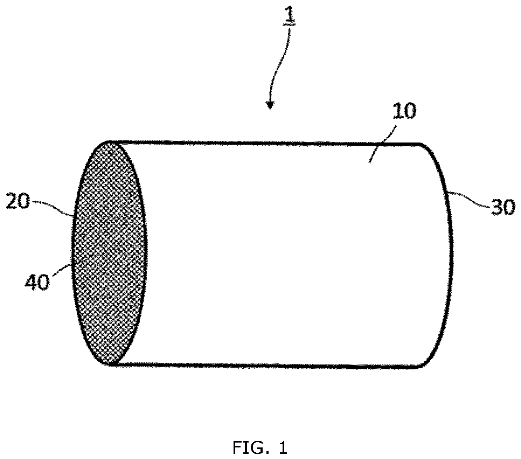

FIG. 1 is a schematic perspective view showing one embodiment of a base material.

### DETAILED DESCRIPTION OF THE INVENTION

The oxidation catalyst for exhaust gas purification according to one embodiment of the present disclosure comprises a base material and a catalyst layer, which is provided on the base material. Hereafter, members constituting the oxidation catalyst for exhaust gas purification will be described in detail.

### [Base Material]

The base material is not particularly limited as long as it consists of a material that can support the catalyst layer described later and has a certain degree of fire resistance. Any conventionally known base material can be used. Examples of materials for the base material can include: ceramics such as alumina, silica, mullite (alumina-silica), cordierite, cordierite-alpha alumina, zircon mullite, alumina-silica magnesia, zircon silicate, sillimanite, magnesium silicate, zircon, petalite, aluminosilicates, aluminum titanate, silicon carbide, and silicon nitride; and metallic materials including refractory metals such as corrosion-resistant alloys which are stainless steel or iron-based ferritic stainless steels. The above-described inorganic or metallic materials may be used singly or in combination of two or more. Among the above, alumina, silica, mullite, cordierite, stainless steel, and silicon carbide are preferable, and those containing cordierite, stainless steel, and silicon carbide are more preferable. In this case, a base material that can be used consists of the above-described materials accounting for preferably 80% by mass or more, more preferably 90% by mass or more, and particularly preferably 99% by mass or more (including 100% by mass) with respect to the entire the base material.

Further, the base material may contain the above-described materials as main components and other components. For example, Fe₂O₃, SiO₂, Na₂O, and the like, which are known to improve the heat resistance of the carrier, may be added to the above-described materials.

The shape of the base material is also not particularly limited and can be in various shapes depending on the applications, such as spherical, cylindrical, bead-like, pellet-like, prismatic-like, tablet-like, needle-like, membrane-like, honeycomb monolith-like, or the like. Among these, bead-like, pellet-like, and honeycomb monolith-like shapes are preferable. Therefore, for the base material according to preferred embodiments of the present disclosure, a material consisting of alumina, silica, mullite, cordierite, or stainless steel as a material and having a bead-like, pellet-like, or honeycomb monolith-like shape is preferable, and a material consisting of cordierite and having a honeycomb monolith-like shape is more preferable.

One embodiment of the base material having a honeycomb monolith-like shape will be described with reference to the drawings. A base material 1 has a cylindrical shape with a cylindrical outer circumferential surface 10, an inlet end 20, and an outlet end 30. The base material 1 comprises a plurality of fine parallel gas flow passages 40 formed in the base material 1. Each flow passage 40 is defined by walls, extends through the base material 1 from the inlet end 20 to the outlet end 30, and is configured to allow the exhaust gas stream to flow. The walls defining the exhaust gas flow passage 40 may have a substantially regular polygonal shape, for example, a square.

The base material 1 has a predetermined length along the exhaust gas flow direction. The length of the base material is about from 25.4 mm to 400 mm, depending on the outer diameter. The outer diameter of the base material is about from 76.5 mm to 400 mm. The size of one flow passage 40 defined by the walls is about from 1.0 mm to 2.15 mm on a side when the flow passage 40 has a square cross section.

### [Catalyst Layer]

The catalyst layer is provided on the above-described base material. More specifically, the catalyst layer is formed on the surfaces of the walls inside the base material 1. The present disclosure is characterized in that the catalyst layer comprises first catalyst particles and second catalyst particles, and the first catalyst particles each comprise: a first carrier particle containing a rare earth element other than cerium; and palladium (Pd) which is carried by the carrier particle. In other words, according to the present disclosure, a cerium-zirconium compound (hereinafter referred to as "CZ compound") or the like conventionally used as a palladium-carrying component is not contained. According to the present disclosure, catalyst particles each comprising a palladium-carrying carrier particle (first carrier particle) containing a rare earth element other than a cerium element and second catalyst particles each comprising a second carrier particle carrying platinum and palladium are used in combination, instead of carrier particles comprising a cerium element such as a CZ compound. The reason that it is possible to realize an oxidation catalyst for exhaust gas purification having an excellent low-temperature catalytic activity (HC, CO, and NOx oxidation performance) without containing a cerium element, as described above, is unclear but can be assumed as follows.

Cerium compounds, especially CZ compounds, have excellent oxygen storage capacity; thus, they can mainly store NOx, which is most difficult to catalytically oxidize at low temperatures and suppress NOx in exhaust gas, even in low-temperature environments such as when starting an engine. Therefore, cerium compounds have been used for conventional oxidation catalyst for exhaust gas purification. An oxidation catalyst for exhaust gas purification comprising such a CZ compound can release NOx and the like when the catalyst portion reaches a high temperature. Here, since the reaction of the harmful components in the exhaust gas in a DOC catalyst is an oxidation reaction, oxygen molecules or oxygen radicals must come into contact with the harmful components and react with them. However, a CZ compound, which has excellent oxygen storage capacity at low temperatures, stores oxygen molecules and oxygen radicals used in oxidation reactions before they react with harmful components, which is thought to have resulted in decreased purification efficiency.

According to the present disclosure, as described above, a catalyst layer comprises: catalyst particles each comprising a palladium-carrying carrier particle containing a rare earth element that promotes a reaction at low temperatures other than a cerium element; and platinum/palladium-carrying catalyst particles having excellent low-temperature catalytic performance, allowing oxygen molecules or oxygen radicals to be brought into sufficient contact with harmful components in the exhaust gas even at low temperatures. Therefore, an oxidation reaction is thought to be more likely to occur even at low temperatures.

### <First Catalyst Particles>

The first catalyst particles constituting the catalyst layer each comprise a palladium-carrying first carrier particle containing a rare earth element other than cerium, as described above. Examples of a rare earth element other than cerium can include scandium (Sc), yttrium (Y), lanthanum (La), praseodymium (Pr), neodymium (Nd), samarium (Sm), europium (Eu), gadolinium (Gd), terbium (Tb), dysprosium (Dy), holmium (Ho), erbium (Er), thulium (Tm), ytterbium (Yb), and lutetium (Lu). Among them, lanthanum, praseodymium, neodymium, samarium, and europium are preferable. These oxides can be used for carrier particles. Rare earth element oxides are sesquioxides (Re₂O₃ and Re are rare earth elements) except for praseodymium (Pr) and terbium (Tb). Praseodymium oxide is usually Pr₆O₁₁, and terbium oxide is usually Tb₄O₇. These may be two or more types of composite oxide.

The first carrier particles may contain oxides such as zirconia, niobia, yttria, and alumina in addition to the above-described rare earth oxides. Although the rare earth oxides and these oxides, such as zirconia, may be separate particles, a composite oxide in which the two are combined is preferably used. As the composite oxide, a lanthanum-zirconia composite oxide can be particularly preferably used.

The first carrier particles may be produced by a known method. The method for producing these is not particularly limited, but preferably a coprecipitation method or an alkoxide method.

As the coprecipitation method, for example, a method in which an alkali substance is added to an aqueous solution containing a mixture of a rare earth salt and various salts of other elements, such as a zirconium salt, in a predetermined stoichiometric ratio to cause hydrolysis or to coprecipitate a precursor, and the resulting hydrolysis product or coprecipitate is calcined can be exemplified. The types of various salts used herein are not particularly limited. Generally, hydrochloride, oxyhydrochloride, nitrate, oxynitrate, carbonate, phosphate, acetate, oxalate, citrate, and the like are preferred. The type of alkaline substance is also not particularly limited. Usually, an ammonia aqueous solution is preferred.

As the alkoxide method, for example, a method in which a mixture of the above-described rare earth alkoxide and alkoxides of other elements, such as zirconium alkoxide, mixed as necessary in a predetermined stoichiometric ratio is hydrolyzed and then calcined is preferred. The type of alkoxide used herein is not particularly limited. Generally, methoxide, ethoxide, propoxide, isopropoxide, butoxide, their ethylene oxide adducts, and the like are preferred. In addition, the rare earth metal element may be blended as a metal alkoxide or as one of the various salts described above.

The calcination conditions for the subsequent calcination treatment may be according to a conventional method and are not particularly limited. The calcination atmosphere may be any one of an oxidizing atmosphere, a reducing atmosphere, or an atmospheric atmosphere. The calcination temperature and treatment time vary depending on the desired composition and its stoichiometric ratio. From the viewpoint of productivity or the like, it is usually from 30 minutes to 12 hours from 150°C to 1300°C, preferably from 30 minutes to 2 hours from 350°C to 800°C. Before high-temperature calcination, reduced-pressure drying may be performed using a vacuum dryer or the like.

The average particle diameter (D50) of the first carrier particles can be appropriately set depending on the desired performance and is not particularly limited. From the viewpoint of maintaining a large specific surface area, increasing heat resistance, increasing the number of their catalytic active sites, or the like, it is preferably from 0.5 µm to 30 µm, more preferably from 1 µm to 20 µm, and still more preferably from 3 µm to 15 µm. The average particle diameter D50 described herein means the median diameter measured using a laser diffraction particle size distribution analyzer.

The first carrier particles carrying palladium can be obtained by preparing a slurry by mixing the above-described particles with palladium nitrate, adding a liquid medium such as water, kneading the mixture using a ball mill or the like, and drying and calcining the slurry. The calcination temperature is preferably from 400°C to 800°C and more preferably from 500°C to 700°C. The calcination time is preferably from 10 minutes to 6 hours and more preferably from 0.5 hours to 2 hours.

### <Second Catalyst Particles>

The second catalyst particles constituting a catalyst layer each comprise a second carrier particle carrying platinum (Pt) and palladium (Pd). The second carrier particle is not particularly limited and can be appropriately selected from those known in the art depending on the required performance. The type thereof is not particularly limited. Examples thereof include, but are not particularly limited to, silica, boehmite, alumina-containing composite oxides such as alumina (α-Al₂O₃, δ-Al₂O₃, γ-Al₂O₃, δ-Al₂O₃, η-Al₂O₃, θ-Al₂O₃), silica-alumina, silica-alumina-zirconia, or silica-alumina-boria, metal oxides or metal composite oxides such as lanthanum oxide, neodymium oxide, and praseodymium oxide, perovskite oxides, barium compounds, anatase titania, and zeolite. Among these, porous particles having a large BET-specific surface area are preferred as a matrix. Specific examples thereof include alumina, silica, boehmite, and silica-alumina.

Examples of alumina include γ-alumina, δ-alumina, and θ-alumina. Examples of silica include crystalline silicas, which have different phase transformations, and amorphous, glassy, and colloidal silicas. Silica generally has a higher BET-specific surface area than alumina, and platinum group elements are highly dispersed. Silica-alumina has crystalline and non-crystalline types. The Si/Al ratio varies and is appropriately set depending on the application in silica-alumina. Examples of titania include anatase titania. Examples of crystalline zeolite include ZSM-type zeolite and β-type zeolite. The matrix particles can be used singly or in an appropriate combination of two or more types.

The average particle diameter (D50) of the first carrier particles can be appropriately set depending on the desired performance and is not particularly limited. From the viewpoint of maintaining a large specific surface area, increasing heat resistance, increasing the number of their catalytic active sites, or the like, it is preferably from 0.5 µm to 30 µm, more preferably from 1 µm to 20 µm, and still more preferably from 3 µm to 15 µm. The definition of average particle diameter is the same as above.

The second carrier particles carrying platinum and palladium can be obtained by preparing a slurry by mixing the above-described particles with platinum nitrate and palladium nitrate, adding a liquid medium such as water, kneading the mixture using a ball mill or the like, and drying and calcining the slurry. The calcination temperature is preferably from 400°C to 800°C and more preferably from 500°C to 700°C. The calcination time is preferably from 10 minutes to 6 hours and more preferably from 0.5 hours to 2 hours.

The mass ratio Pt: Pd of platinum and palladium carried by the second carrier particles is preferably 1:0.1 to 10 and more preferably 1:0.2 to 4.

The catalyst layer may contain other components as long as it contains the above-described first and second catalyst particles. Examples of other components include, but are not particularly limited to, various types of additives known in the art, including binders such as boehmite and alumina sol, dispersion stabilizers such as nonionic surfactants and anionic surfactants, pH adjusters, viscosity adjusters, and platinum group elements such as rhodium (Rh) other than platinum and palladium. In addition, catalysts, co-catalysts, and the like known in the art may also be contained as other components.

Examples of binders include various types of sol, such as boehmite sol, alumina sol, titania sol, silica sol, and zirconia sol. In addition, soluble salts such as aluminum nitrate, aluminum acetate, titanium nitrate, titanium acetate, zirconium nitrate, zirconium acetate, and the like can also be used as binders. Acids such as acetic acid, nitric acid, hydrochloric acid, and sulfuric acid can also be used as binders.

The amount of binder used is not particularly limited but is preferably from 0.01% by mass to 15% by mass and more preferably from 0.05% by mass to 10% by mass with respect to the total amount of the catalyst layer. In addition to the above-described components, the catalyst layer may contain catalysts, co-catalysts, and various additives known in the art.

A barium-containing compound can also be used as an additive in the catalyst layer. It can be expected to improve heat resistance and activate catalyst performance by blending a barium-containing compound. Examples of a barium-containing compound include, but are not particularly limited to, sulfates, carbonates, complex oxides, and oxides. More specific examples thereof include BaO, Ba(CH₃COO)₂, BaO₂, BaCO₃, BaZrO₃, and BaAl₂O₄. The amount of barium-containing compound used is not particularly limited but is preferably from 1% by mass to 20% by mass and more preferably from 2% by mass to 15% by mass with respect to the total amount of the catalyst layer.

The content of the first and second catalyst particles in the catalyst layer can be appropriately set depending on the desired performance and not particularly limited; however, it is preferably 50% by mass to 100% by mass, more preferably from 70% by mass to 95% by mass, and still more preferably from 90% by mass to 95% by mass.

In addition, the content of the first catalyst particles in the catalyst layer is preferably from 10% by mass to 90% by mass and more preferably from 30% by mass to 70% by mass with respect to the total amount of the first and second catalyst particles.

The catalyst layer provided on the base material surface does not need to have the same composition all over, and the composition of the catalyst layer may be different between the vicinity of the inlet end side and the vicinity of the outlet end side of the base material or other catalyst layers may be layered thereon. For example, a catalyst layer comprising the first catalyst particles and a catalyst layer comprising the second catalyst particles may be stacked in layers. However, from the viewpoint of the effects of the present disclosure, it is preferable that the first catalyst particles and the second catalyst particles are contained together in a catalyst layer.

The catalyst layer can be formed by preparing a slurry by adding the above-described first and second catalyst particles and other components to be added optionally, such as a binder and a dispersion stabilizer, to a liquid medium such as water and kneading the mixture using a ball mill or the like, applying the slurry to the base material surface, and drying and calcining the slurry. Various known coating methods, wash coating methods, and zone coating methods can be applied as a coating method. By adjusting the coating amount, a catalyst layer of desired thickness can be formed.

The drying temperature is not particularly limited but is, for example, preferably from 70°C to 200°C and more preferably from 80°C to 150°C. The calcination temperature is not particularly limited but is, for example, preferably from 300°C to 650°C and more preferably from 400°C to 600°C. The heating means used at this time can be, for example, known heating means such as an electric or gas furnace.

The coating amount can be set as appropriate depending on the desired performance and is not particularly limited. Considering the influence of pressure loss, engine output, fuel efficiency, and the like, the coating amount is preferably from 10 g to 100 g, more preferably from 12 g to 80 g, and still more preferably from 15 g to 60 g per unit volume (1 L) of the base material. The unit volume (1L) of the base material described herein means 1L as the entire bulk volume, including not only the pure volume of the base material but also the volume of voids formed inside the base material. In addition, in a case in which cells are defined and formed inside the base material, it means 1L as the entire bulk volume, including not only the pure volume of the base material and the volume of voids in the base material but also the volume of cells.

The amount of palladium in the entire catalyst layer can be set as appropriate depending on the desired performance and is not particularly limited. The amount of noble metal per unit volume (1 L) of the base material is preferably from 0.4 g to 10 g, more preferably from 0.5 g to 5 g, and still more preferably from 0.6 g to 1.5 g. In addition, the amount of platinum in the entire catalyst layer can be set as appropriate depending on the desired performance and is not particularly limited. The amount of noble metal per unit volume (1 L) of the base material is preferably from 0.4 g to 10 g, more preferably from 0.5 g to 5 g, and still more preferably from 1.2 g to 3.0 g. The amounts of palladium and platinum in the catalyst layer can be adjusted based on the blending ratio of carrier particles and a noble metal element (platinum or palladium) when preparing the first catalyst particles and the second catalyst particles.

The oxidation catalyst for exhaust gas purification can be used as, for example, a catalyst for purifying exhaust gas from diesel engines, gasoline engines, jet engines, boilers, gas turbines, and the like. In particular, it can be favorably used as an oxidation catalyst for exhaust gas purification with which exhaust gas from diesel engines is brought into contact. The oxidation catalyst for exhaust gas purification can be placed in the exhaust systems of various engines. The number of catalysts and installation locations can be appropriately designed according to exhaust gas regulations. For example, in a case in which exhaust gas regulations are strict, the number of installation locations can be two or more, and the installation location can be designated as one under the floor directly behind the catalyst immediately beneath the exhaust system. According to the oxidation catalyst for exhaust gas purification in the embodiment of the present invention, even when the catalyst does not contain a Ce compound, which was previously considered essential, it can exert excellent CO, HC, and NOx purification effects, not only during low-temperature startup but also under various driving specifications, including high-speed running at high temperatures.

### Examples

Hereafter, the present disclosure will be described in more detail based on Examples and Comparative Examples; however, the disclosure is not limited by the following Examples within the scope of the gist of the disclosure. In other words, the materials, usage amounts, proportions, treatment details, treatment procedures, and so forth shown in the following Examples can be changed as appropriate without departing from the spirit of the present disclosure.

### [Evaluation Method]

### <Light-off Performance Evaluation>

Light-off performance was evaluated using each catalyst for exhaust gas purification described below. A section having a catalyst size of 25.4 mm in diameter x 30 mm in length was placed in an extractor. In the presence of a model gas (volume composition ratio: CO₂: 14.37% by volume; O₂: 0.38% by volume; NO: 0.011% by volume; HC: 0.02% by volume; CO: 0.08% by volume; N₂: balance; flow rate: 24 L/min), the catalyst inlet gas temperature was changed from 200°C to 450°C at a constant heating rate (10°C/min).

Next, the catalyst inlet gas temperature was changed from 25°C to 600°C at a constant heating rate (10°C/min), and the gas compositions at the catalyst inlet and the catalyst inlet outlet were analyzed by FTIR, thereby determining the HC purification rate. Then, the temperature at which the HC purification rate reached 50% (light-off temperature, HC-T50) was measured.

Similarly, the purification rates of CO and NOx were determined in the same manner, and the point at which the purification rate became 50% (T50) and the point at which it became 75% (T75) were determined. Here, the purification rate at that temperature, for example, the CO purification rate at 300°C, is referred to as "CO_C300."

In other words, "HC_T50" is the temperature at which 50% of HC in the inflow gas is converted, and "HC_C300" is the reaction rate (%) of HC at 300°C. The purification rate is calculated from the gas composition on the outlet side/the amount of gas on the inlet side. In a case in which preliminarily stored gas such as NOx is released by heat so that the purification reaction is also insufficient, the NOx concentration in the outflow gas may be higher than that in the inflow gas, and the purification rate may take a negative value.

In any case, it can be said that the lower the temperatures of T50 and T75, the more preferable they are, and the higher the temperature of C300 or the like, the more preferable it is.

### [Reference Example 1]

### (Preparation of Pd/LZ Catalyst Particles)

Lanthanum-zirconia particles (manufactured by DAIICHI KIGENSO KAGAKU KOGYO CO., LTD.; trade name: LSZ-S9; specific surface area: from 60 m²/g to 85m²/g) were used as carrier particles. In addition, a palladium nitrate solution was prepared. The above-described lanthanum-zirconia particles were immersed in the palladium nitrate solution and then heat-treated at 600°C for 0.5 hours, thereby obtaining Pd/LZ catalyst particles.

### [Reference Example 2]

### (Preparation of Pt-Pd/SiO₂-Al₂O₃ Catalyst Particles)

Silica-alumina particles (manufactured by Sasol Germany GmbH; trade name: Siralox5/150TH; specific surface area: from 170 m²/g to 190 m²/g) were used as carrier particles. In addition, a mixed solution of platinum nitrate and palladium nitrate was prepared. The above-described silica-alumina particles were immersed in the mixed solution and then platinum nitrate and palladium nitrate heat-treated at 600°C for 0.5 hours, thereby obtaining Pt-Pd/silica-alumina catalyst particles.

### [Reference Example 3]

### (Preparation of Pd/CZ Catalyst Particles)

Ceria-zirconia particles (manufactured by Solvay Special Chem Japan, Ltd.; trade name: OPTALYS-398; specific surface area: from 50 m²/g to 70 m²/g; average particle size D50: from 6 µm to 16 µm) were used as carrier particles. In addition, a palladium nitrate solution was prepared. The above-described ceria-zirconia particles were immersed in the palladium nitrate solution and then heat-treated at 600°C for 0.5 hours, thereby obtaining Pd/CZ catalyst particles.

### [Example 1]

A cordierite honeycomb base material was prepared. The base material was coated with a slurry containing the Pt-Pd/SiO₂-Al₂O₃ catalyst particles obtained in Reference Example 2 at 40 g/L to result in a wash-coat amount of 60 g/L, followed by drying at 150°C for 2 hours and calcination at 550°C for 0.5 hours, thereby forming a catalyst layer on the base material surface.

Subsequently, the calcined base material was coated with a slurry containing the Pd/LZ catalyst particles obtained in Reference Example 1 at 40 g/L to result in a wash-coat amount of 80 g/L, followed by drying at 150°C for 2 hours and calcination at 550°C for 0.5 hours.

### [Comparative Example 1]

A catalyst layer was formed on the base material surface under the same conditions as in Example 1, except that the base material was not coated with the slurry containing Pd/LZ catalyst particles obtained in Reference Example 1.

### [Comparative Example 2]

A catalyst layer was formed on the base material surface under the same conditions as in Example 1, except that the base material was not coated with the slurry containing Pt-Pd/SiO₂-Al₂O₃ catalyst particles obtained in Reference Example 2.

### [Comparative Example 3]

A catalyst layer was formed on the base material surface under the same conditions as in Comparative Example 2, except that the Pd/LZ catalyst particles obtained in Reference Example 1 were replaced with the Pd/CZ catalyst particles described in Reference Example 3.

### [Comparative Example 4]

A catalyst layer was formed on the base material surface under the same conditions as in Example 1, except that the Pd/LZ catalyst particles obtained in Reference Example 1 were replaced with the Pd/CZ catalyst particles obtained in Reference Example 3.

Evaluation results of the light-off performance for the catalysts for exhaust gas purification obtained as described above are shown in Table 1 below.

**[Table 1]**

| | Configuration of Catalyst Layer | | Liqht-off Performance Evaluation | | | | | | |
|---|---|---|---|---|---|---|---|---|---|
| | First catalyst particles | Second catalyst particles | CO_T50 (°C) | CO_T90 (°C) | HC_T50 (°C) | HC_T90 (°C) | NO_C150 (%) | NO_C200 (%) | NO_C300 (%) |
| Example 1 | Pd/LZ | Pt-Pd/SiO₂-Al₂O₃ | 145 | 185 | 165 | 210 | 0 | 20 | 22 |
| Comparative Example 1 | - | Pt-Pd/SiO₂-Al₂O₃ | 195 | 220 | 210 | 245 | -4 | 10 | 9 |
| Comparative Example 2 | Pd/LZ | - | 155 | 260 | 210 | 275 | -5 | -4 | -3 |
| Comparative Example 3 | Pd/CZ | - | 230 | - | 270 | - | -22 | -20 | -5 |
| Comparative Example 4 | Pd/CZ | Pt-Pd/SiO₂-Al₂O₃ | 185 | 225 | 205 | 255 | -12 | 9 | 6 |

As is apparent from the evaluation results shown in Table 1, in Comparative Example 3, in which the conventional ceria-zirconia carriers were used, the carriers had excellent NOx storage performance but showed low purification performance at low temperatures. Thus, the carriers are insufficient for CO and HC. To compensate for such insufficiency, in Comparative Example 4, in which coating with Pt-Pd-carrying alumina particles was further carried out, low-temperature purification performance was relatively improved. Still, it is at an insufficient level.

Meanwhile, in Example 1, in which catalyst particles of lanthanum-zirconia carriers carrying Pd and catalyst particles of silica-alumina carriers carrying Pt-Pd were used in combination, excellent performance in purifying CO, HC, and NOx at low temperatures was confirmed. The results of Example 1 are excellent effects unexpectable from the results of Comparative Examples 1 and 2 in which the particles of each type were used singly.

## Claims

1. An oxidation catalyst for exhaust gas purification, comprising a base material and a catalyst layer provided on the base material,
wherein the catalyst layer comprises first catalyst particles and second catalyst particles,
the first catalyst particles each comprise a first carrier particle containing a rare earth element other than cerium and palladium (Pd) carried by the first carrier particle, and
the second catalyst particles each comprise a second carrier particle and platinum (Pt) and palladium (Pd) carried by the second carrier particle.

2. The oxidation catalyst for exhaust gas purification according to claim 1, wherein the rare earth element other than cerium is at least one light rare-earth element selected from the group consisting of lanthanum (La), praseodymium (Pr), neodymium (Nd), samarium (Sm), and europium (Eu).

3. The oxidation catalyst for exhaust gas purification according to claim 1, wherein the first catalyst particles and the second catalyst particles are contained together in the catalyst layer.

4. The oxidation catalyst for exhaust gas purification according to claim 1, wherein the catalyst layer substantially contains no cerium element.

5. The oxidation catalyst for exhaust gas purification according to claim 1, wherein the first carrier particle further contains a zirconia element.

6. The oxidation catalyst for exhaust gas purification according to claim 1, wherein the first carrier particle is a lanthanum-zirconia composite oxide particle.

7. The oxidation catalyst for exhaust gas purification according to claim 1, the second carrier particle is a silica-alumina composite oxide particle.

8. The oxidation catalyst for exhaust gas purification according to claim 1, wherein the first carrier particle is a lanthanum-zirconia composite oxide particle, and the second carrier particle is a silica-alumina composite oxide particle.

9. The oxidation catalyst for exhaust gas purification according to any one of claims 1 to 8, wherein the base material has a predetermined length along an exhaust gas flow direction and comprises an inlet end and an outlet end.
